# EUROPEAN PATENT APPLICATION

(11) **EP 1 266 769 A1**
(43) Date of publication of application: **18.12.2002**
(21) Application number: 01401430.2
(22) Date of filing: 31.05.2001
(51) Int. Cl.: B42D 15/10, B32B 31/12, B32B 31/00

(54) **Card manufacturing**

(71) Applicant: SCHLUMBERGER Systèmes, 92120 Montrouge (FR)
(72) Inventor: Limelette, Yann, 92120 Montrouge (FR); Véré, Denis c/o Schlumberger Systémes, 92542 Montrouge Cedex (FR)
(74) Representative: den Braber, Gerard Paul

(57) **Abstract**

In a card manufacturing method, a buffer film (BF) is sandwiched between a core sheet (CS) and a printable sheet (PS). The buffer film (BS) is substantially rigid at room temperature and is substantially flexible at a temperature of 100 degrees Celsius. One or more graphic items can be printed on the printable sheet (PS). Subsequently, the printable sheet (PS) may be provided with a protective film, preferably by means of a hot roll. The buffer film (BF) prevents that the card thus obtained will be bend.

## Description

### FIELD OF THE INVENTION

The invention relates to cards and the manufacturing thereof. The invention may be applied in, for example, the manufacturing of data cards that comprise a magnetic track or an electronic circuit for storing data. The invention is particularly suitable for manufacturing data cards that need to be personalized by means of a graphic item such as, for example, an identity photo.

### BACKGROUND OF THE INVENTION

A card can be manufactured in the following manner. The manufacturing process starts with a core sheet made of, for example, polyvinyl chloride (PVC). The core sheet has a thickness that is typically comprised between 300 and 600 microns (µm). The core sheet itself may be an assembly of several sheets that are laminated together. The core sheet has two main surfaces; i.e. it has two sides.

Typically, both sides of the core sheet are provided with a so-called overlay. An overlay is a sheet whose thickness is smaller than that of the core sheet. The overlay has a thickness that is typically comprised between 50 and 100 microns (µm). The overlay may also be made of, for example, polyvinyl chloride (PVC). The overlay is preferably transparent.

A graphic item can be printed on an overlay in the following manner. One or more coloring substances are deposited on the overlay in accordance with a desired pattern. A heat source is placed close to the overlay with the coloring substances deposited thereon. Heat causes the coloring substances to penetrate the overlay. It can thus be said that the overlay constitutes a printable sheet.

A graphic item printed on the overlay may be relatively fragile. That is, the graphic item or rather the print may be relatively sensitive to wear. This is particularly the case if the graphic item is colorful. For that reason, the overlay with the graphic item printed thereon, is provided with a protective film, which is also called patch or overlaminate.

The protective film is typically fixed onto the overlay by means of pressure and heat. The core sheet with the overlay and the protective film, which faces the overlay, are applied to a hot roll. The hot roll heats the aforementioned elements of the card and presses these elements against each other. The hot roll typically heats the elements so that their temperature exceeds 100 degrees Celsius or more. A typical temperature of the hot roll is 140 degrees Celsius.

### SUMMARY OF THE INVENTION

It is an object of the invention to allow a reduction of manufacturing costs.

To that end, a buffer film is sandwiched between a core sheet and a printable sheet. The buffer film is substantially rigid at room temperature and is substantially flexible at a temperature of 100 degrees Celsius.

The invention takes the following aspects into consideration. In the manufacturing process described as background of the invention, a core sheet with an overlay and a protective film that faces the overlay are applied to a hot roll. There is a substantial risk that the card thus obtained will be bend. The reason for this is that, in terms of dilatation, the protective film reacts differently to heating and subsequent cooling than the assembly of the core sheet and the overlay. The card may be bend to an extent that it is not suitable for certain application.

A solution to the bending problem is to manufacture a card that is symmetrical. Both sides of the core sheet are provided with an overlay. Graphic items are printed on one overlay or both overlays. Each overlay is made to face a protective film. The core sheet with its overlays and the protective films are applied to a hot roll. The mechanical stress that one protective film exerts is then compensated by the mechanical stress that the other protective film exerts. Accordingly, the card thus obtained will not be bend or, if there is any bending, it will be minor.

However, the symmetrical-card solution described in the preceding paragraph is relatively expensive. It requires a card-manufacturing machine that comprises two hot rolls: one hot roll for each protective film. Moreover, it requires two protective films that differ from each other. A data card has typically one side on which there is an area that should not be covered with the protective film. For example, if the data card has a magnetic track, this track should not be covered. Thus, the protective film that is placed on the side with the magnetic track should have an opening corresponding to the magnetic track, whereas such an opening is not desired in the protective film for the other side.

In accordance with the invention, a buffer film is provided between the core sheet and the overlay, which constitutes a printable sheet. The buffer film is substantially rigid at room temperature and is substantially flexible at a temperature of 100 degrees Celsius special. The buffer film prevents that the protective film exerts a mechanical stress on the other elements of the card. Accordingly, it is prevented that the card is bend without this requiring a symmetrical structure of the card. It has been explained hereinbefore that a symmetrical structure entails relatively high manufacturing costs. Thus, the invention allows a reduction in cost.

It should be noted that it is often not necessary to provide each overlay (printable sheet) with a protective film. In certain applications, one overlay comprises graphic items that are relatively sensitive to wear because, for example, they are very colorful, whereas the other overlay comprises graphic items that are relatively resistant to wear because, for example, they are in black and white. In such applications, it is sufficient to provide the first-mentioned overlay with a protective film. The overlay comprising a "resistant" graphic item does not need a protective film.

These and other aspects of the invention will be described in greater detail hereinafter with reference to drawings.

### BRIEF DESCRIPTION OF THE DRAWINGS

FIG.1 is a conceptual diagram illustrating basic features of the invention; and
FIGS. 2-7 illustrate a card manufacturing method.

### DETAILED DESCRIPTION

The following remarks relate to reference signs. Like entities are designated by like letter references in all Figures. Several similar entities may appear in a single Figure. In that case, a digit or a suffix is added to the letter reference in order to distinguish like entities. The digit or the suffix may be omitted for convenience or it may be replaced by an asterisk in the case where its value is not important (do not care value). This applies to the description as well as the claims.

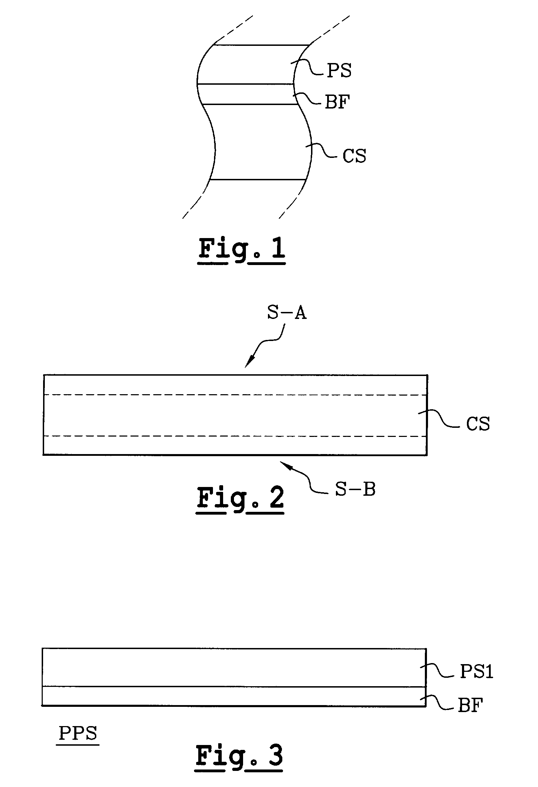

FIG.1 illustrates basic features of the invention. A buffer film BF is sandwiched between a core sheet CS and a printable sheet PS. The buffer film BS is substantially rigid at room temperature and is substantially flexible at a temperature of 100 degrees Celsius.

In a card manufacturing process, one or more graphic items can be printed on the printable sheet PS. Subsequently, the printable sheet PS is provided with a protective film, preferably by means of a hot roll. The buffer film BF prevents that the card thus obtained will be bend.

FIGS. 2-7 illustrate a card manufacturing method. It is particularly suitable for manufacturing data cards that need to be personalized by means of a graphic item such as, for example, an identity photo.

FIG. 2 illustrates a cross-section of a core sheet CS. The core sheet CS is a main element of the card to be manufactured. The core sheet CS has two main surfaces, that is, it has two sides: S-A, S-B. The core sheet CS is preferably made of polyester of a type that is commonly identified with the abbreviation PET-F. Such polyester can be purchased from the chemical firm Dupont who offers the polyester under the trademark Melinex. An advantage of the PET-F polyester is that it is relatively rigid at room temperature and that it remains relatively rigid when it is applied to a hot roll. The core sheet CS may be a laminate of several sheets, one or more of sheets being made of PET-F. Other sheets may be made of polyvinyl chloride (PVC).

FIG. 3 illustrates a cross-section of a processed printable sheet PPS, which is the result of a printable-sheet processing step. In this step, a main surface of a printable sheet PS1 is provided with a buffer-film BF that it substantially rigid at room temperature and that is substantially flexible at a temperature of 100 degrees Celsius. The printable sheet PS1 may be, for example, a sheet that is made of PVC and that has a thickness comprised between 50 and 100 microns (µm). In the field of card manufacturing, such a sheet is commonly referred to as overlay.

The buffer film BF may be, for example, a hot-melt glue. The hot-melt glue preferably comprises linear polymers that have following property. A hot roll that heats the hot-melt glue causes the linear polymers to be transformed into tri-dimensional polymers through creation of transversal liaisons. The hot-melt glue will thus become rigid which is desirable in terms of resistance to aging and physical attacks of the card to be manufactured.

There are several techniques for depositing the buffer-film BF onto the printable sheet PS1. In accordance with one technique, the substance that will form the buffer film BF is dissolved by means of a dissolvent. The dissolved substance is applied to the printable sheet PS1. There is then a drying process during which the dissolvent evaporates. In accordance with another technique, the substance that will form the buffer film BF is heated so that it becomes somewhat liquid. The substance in its liquid form is then applied to the printable sheet PS1. There is then a cooling process during which the substance becomes solid again.

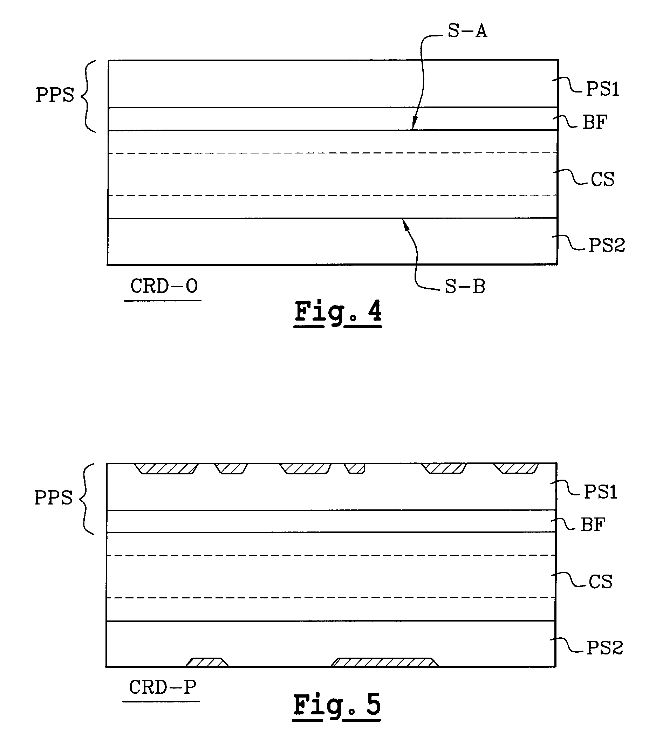

FIG. 4 illustrates a printable card CRD-O, which is the result of a core-sheet processing step. In this step, side S-A of the core sheet CS illustrated in FIG. 2 is provided with the processed printable sheet PPS illustrated in FIG. 3. Side S-B of the core sheet CS is provided with an ordinary printable sheet PS2 in the form of an overlay used in conventional card manufacturing methods. The core sheet CS can be provided with processed printable sheet PPS and the ordinary printable sheet PS2 by means of lamination.

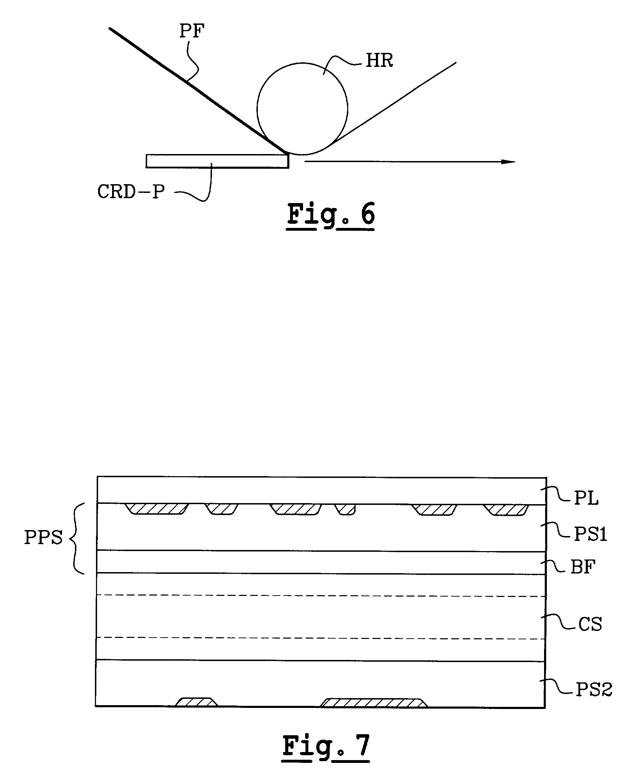

FIG. 5 illustrates a printed card CRD-P, which is the result of a printing step. In this step, graphic items are printed on both sides of the printable card CRD-O illustrated in FIG.4. More specifically, one or more graphic items that are sensitive to wear are printed on the side comprising processed printable sheet PPS. One or more graphic items that are resistant to wear are printed on the ordinary printable sheet PS2.

FIG. 6 illustrates a finishing step. In this step, the printed card CRD-P illustrated in FIG. 5 and a protective film PF are applied to a hot roll HR. The protective film PF faces the side of the printed card CRD-P that comprises the processed printable sheet PPS illustrated in FIG. 5. Accordingly, the hot roll HR deposes a protective layer onto the processed printable sheet PPS.

FIG. 7 illustrates a protected printed card, which is the result of the finishing step. The processed printable sheet PPS on which graphic items have been printed as illustrated in FIG. 5, is now provided with a protective layer PL.

The description with reference to the FIGS. 2-7 drawings illustrates rather than limits the invention. It will be evident that there are numerous alternatives, which fall within the scope of the appended claims. In this respect, the following closing remarks are made.

There are various manners to sandwich a buffer film between a core sheet and a printable sheet. The method described with reference to FIGS. 2-7 illustrates only one possible implementation in which the buffer film BF is deposed on the printable sheet PS1 so as to obtain a processed printable sheet PPS, which processed printable sheet PPS is subsequently attached to the core sheet CS. Another possible method is, for example, to depose a buffer film on a core sheet so as to obtain a processed core sheet and, subsequently, attach a printable sheet to the side of the processed core sheet which comprises the buffer film.

There are various manners to manufacture a card. The method described with reference to FIGS. 2-7 illustrates only one possible implementation in which the card comprises only one buffer film. Another possible implementation is to provide the card with two or more buffer films. For example, a buffer film may be provided between each printable sheet and the core sheet concerned.

Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps.

## Claims

1. A card comprising:
- a core sheet;
- a buffer film that is substantially rigid at room temperature and that is substantially flexible at a temperature of 100 degrees Celsius;
- a printable sheet; the buffer film being sandwiched between the core sheet and the printable sheet.

2. A card as claimed in claim 1 wherein the buffer film is composed of a holt-melt glue.

3. A card as claimed in claim 1 wherein the buffer film comprises linear polymers that, in response to hot-roll heating, transform into tri-dimensional polymers through creation of transversal liaisons.

4. A card as claimed in claim 1 wherein the core sheet comprises polyester of the PET-F type.

5. A card as claimed in claim 1 which further comprises a protective film, the printable sheet being sandwiched between the buffer film and the protective film.

6. A method of manufacturing a card comprising:
- a printable-sheet processing step in which a main surface of a printable sheet is provided with a buffer film that it substantially rigid at room temperature and that is substantially flexible at a temperature of 100 degrees Celsius; and
- a core-sheet processing step in which a core sheet is provided with the printable sheet that has been provided with the buffer film so that the buffer film is sandwiched between the core sheet and the printable sheet.

7. A method of manufacturing a card comprising:
- a buffer-film providing step in which a main surface of a core sheet is provided with a buffer-film that it substantially rigid at room temperature and that is substantially flexible at a temperature of 100 degrees Celsius; and
- a printable-sheet providing step in which the buffer-film is provided with a printable sheet so that the buffer-film is sandwiched between the core sheet and the printable sheet.

8. A method as claimed in claim 6 or 7 which further comprises the step of:
- a protective-film providing step in which the printable sheet is provided with a protective film so that the printable sheet is sandwiched between the buffer film and the protective film.
